# EUROPÄISCHE PATENTSCHRIFT

(11) **EP 4 320 413 B1**
(45) Veröffentlichungstag und Bekanntmachung des Hinweises auf die Patenterteilung: **24.12.2025**
(21) Anmeldenummer: 22718195.5
(22) Anmeldetag: 25.03.2022
(51) Int. Cl.: G01F 23/00, F16B 2/06, F16B 35/04

(54) **VORRICHTUNG ZUR ERMITTLUNG DES FÜLLSTANDS EINES MEDIUMS IN EINEM BEHÄLTER**
DEVICE FOR DETERMINING THE FILL LEVEL OF A MEDIUM IN A CONTAINER
DISPOSITIF POUR LA DÉTERMINATION DU NIVEAU DE REMPLISSAGE D'UN MILIEU DANS UN CONTENANT

(30) Priorität: 09.04.2021 DE 102021108871
(43) Veröffentlichungstag der Anmeldung: 14.02.2024
(73) Patentinhaber: BEDIA Motorentechnik GmbH & Co. KG, 90518 Altdorf (DE)
(72) Erfinder: KETTLER, Gernot, 90518 Altdorf (DE); SCHMIDT, Daniel, 90518 Altdorf (DE)
(74) Vertreter: Hafner & Kohl PartmbB
(86) Internationale Anmeldenummer: PCT/EP2022/057965
(87) Internationale Veröffentlichungsnummer: WO 2022/214337

(56) Entgegenhaltungen:
- DE-A1- 10 352 159
- DE-A1- 102019 126 381
- JP-A- S5 748 616
- US-A1- 2008 134 778

## Beschreibung

Die Erfindung betrifft eine Vorrichtung zur Ermittlung des Füllstands eines Mediums in einem Behälter, welche Vorrichtung eine Sensoreinrichtung zur Erfassung von den Füllstand eines Mediums in einem Behälter beschreibenden Füllstandsinformationen und eine Befestigungseinrichtung zur Befestigung der Sensoreinrichtung in einem Behälter umfasst.

Entsprechende Vorrichtungen zur Ermittlung des Füllstands eines Mediums in einem Behälter sind aus dem Stand der Technik in einer Vielzahl an unterschiedlichen Ausführungsformen dem Grunde nach bekannt.

Ein Verbesserungs- bzw. Weiterentwicklungsbedarf entsprechender Vorrichtungen besteht insbesondere im Zusammenhang mit der Montage der Vorrichtungen in einem entsprechenden Behälter. Dies gilt insbesondere im Hinblick auf die Gewährleistung einer gewünschten Ausrichtung bzw. Orientierung der jeweiligen Sensoreinrichtungen innerhalb des Behälters.

Die Befestigungseinrichtungen bekannter Vorrichtungen ermöglichen sonach zwar grundsätzlich die Realisierung einer stabilen Befestigung einer jeweiligen Sensoreinrichtung in einem Behälter, allerdings ist der Montageaufwand - dies gilt wiederum insbesondere im Hinblick auf die Gewährleistung einer gewünschten Ausrichtung bzw. Orientierung der Sensoreinrichtung innerhalb des Behälters - der Vorrichtungen vergleichsweise hoch.

Gattungsgemäße Vorrichtungen sind aus den Dokumenten DE 10 2019 126 38 A1, JP S5748616 A und US 2008/134778 A1 bekannt. DE10352159A1 offenbart ein Sensormodul, bei dem ein Befestigungselement drehbar auf einem Sensorkörper gelagert ist.

Der Erfindung liegt demnach die Aufgabe zugrunde, eine, insbesondere im Hinblick auf die Gewährleistung einer gewünschten Ausrichtung bzw. Orientierung der Sensoreinrichtung innerhalb eines Behälters, verbesserte Vorrichtung zur Ermittlung des Füllstands eines Mediums in einem Behälter anzugeben.

Die Aufgabe wird durch eine Vorrichtung zur Ermittlung des Füllstands eines Mediums in einem Behälter gemäß Anspruch 1 gelöst. Die hierzu abhängigen Ansprüche betreffen mögliche Ausführungsformen der Vorrichtung.

Ein erster Aspekt der Erfindung betrifft eine Vorrichtung zur Ermittlung des Füllstands eines Mediums in einem Behälter. Die Vorrichtung ist sonach zur Ermittlung des Füllstands eines fluiden Mediums, wie z. B. eines Gases und/oder einer Flüssigkeit, in einem Behälter, wie z. B. einem Tank, eingerichtet. Die Vorrichtung kann insbesondere eingerichtet sein, den Füllstand, z. B. öliger oder wässriger, Flüssigkeiten, wie z. B. Betriebsflüssigkeiten, eines Fahrzeugs, insbesondere eines Kraftfahrzeugs, oder einer Arbeitsmaschine, insbesondere einer Bau- oder Landmaschine, zu ermitteln.

Die Vorrichtung umfasst eine Sensoreinrichtung zur Erfassung von den Füllstand eines Mediums in einem Behälter beschreibenden Füllstandsinformationen. Die Sensoreinrichtung ist sonach eingerichtet, den Füllstand eines Mediums in einem Behälter beschreibende Füllstandsinformationen zu erfassen. Die Sensoreinrichtung umfasst typischerweise wenigstens ein aktives oder passives Sensorelement, welches eingerichtet ist, entsprechende Füllstandsinformationen zu erfassen. Entsprechende Füllstandsinformationen werden typischerweise über geeignete, an sich bekannte Verbindungselemente, wie z. B. Signalleitungen, an eine der Vorrichtung zuordenbare oder zugeordnete hardware- und/oder softwaremäßig implementierte Auswerteeinrichtung übertragen. Eine entsprechende Auswerteeinrichtung ist typischerweise eingerichtet, entsprechende Füllstandsinformationen im Hinblick auf den bzw. einen zu ermittelnden Füllstand eines Mediums in einem Behälter auszuwerten. Ferner ist eine entsprechende Auswerteeinrichtung typischerweise eingerichtet, eine ein Auswerteergebnis beschreibende Auswerteinformation zu erzeugen und über eine geeignete Ausgabeeinrichtung, wie z. B. eine Anzeigeeinrichtung und/oder eine drahtgebundene oder drahtlose Kommunikationseinrichtung, an einen Nutzer und/oder an ein nutzerseitiges Endgerät auszugeben. Die Vorrichtung kann sonach auch eine entsprechende Auswerteinrichtung und/oder Ausgabeeinrichtung umfassen.

Die Vorrichtung umfasst ferner eine Befestigungseinrichtung zur Befestigung der Sensoreinrichtung in einem mit einem Medium, dessen Füllstand zu ermitteln ist, befüllbaren bzw. befüllten Behälter. Die Befestigungseinrichtung ist sonach zur Befestigung der Sensoreinrichtung in einem entsprechenden Behälter eingerichtet. Die Befestigungseinrichtung ist insbesondere eingerichtet, die Sensoreinrichtung in einer definierten Ausrichtung bzw. Orientierung in einem entsprechenden Behälter bzw. in einem entsprechenden Behälterinnenraum, insbesondere relativ zu einem in dem Behälter bzw. Behälterinnenraum befindlichen Medium, zu befestigen.

Die Befestigungseinrichtung umfasst einen, insbesondere hohlzylinderartigen bzw. -förmigen, Gehäusekörper. Der Gehäusekörper weist, insbesondere aufgrund einer hohlzylinderartigen bzw. -förmigen Grundform, typischerweise eine symmetrische, d. h. insbesondere eine rotationssymmetrische, Grundform auf und definiert sonach typischerweise eine Symmetrie- bzw. Zentralachse. Die Symmetrie- bzw. Zentralachse des Gehäusekörpers kann mit einer Längsachse des Gehäusekörpers zusammenfallen.

Der Gehäusekörper umfasst wenigstens eine Befestigungsschnittstelle zur Befestigung der Sensoreinrichtung an dem Gehäusekörper und wenigstens ein drehbar an dem Gehäusekörper gelagertes Befestigungselement zur Befestigung der Befestigungseinrichtung, d. h. insbesondere des Gehäusekörpers nebst daran befestigter Sensoreinrichtung, an bzw. in einem Behälter. Der Gehäusekörper ist in funktioneller bzw. konstruktiver Hinsicht sonach einerseits über die Befestigungsschnittstelle so konzipiert, dass sich die bzw. eine entsprechende Sensoreinrichtung an dem Gehäusekörper befestigen lässt, und andererseits über das Befestigungselement so konzipiert, dass sich der Gehäusekörper nebst daran befestigter Sensoreinrichtung an bzw. in einem Behälter befestigen lässt.

Bei der Befestigungsschnittstelle zur Befestigung der Sensoreinrichtung an dem Gehäusekörper kann es sich beispielsweise um eine Gewindeeinrichtung, wie z. B. um ein Außen- oder Innengewinde, handeln. Eine entsprechende Gewindeeinrichtung ist eingerichtet, mit einer korrespondierenden Gegengewindeeinrichtung, wie z. B. einem Innen- oder Außengewinde, der Sensoreinrichtung unter Ausbildung einer stabilen Befestigung der Sensoreinrichtung an dem Gehäusekörper zusammenzuwirken. Grundsätzlich kommt jedwede Befestigungsschnittstelle in Betracht, die eine form- und/oder kraft- und/oder stoffschlüssige Befestigung der Sensoreinrichtung an dem Gehäusekörper ermöglicht.

Aus vorstehenden Ausführungen ergibt sich, dass die Befestigungsschnittstelle zur (beschädigungs- bzw. zerstörungsfrei) lösbaren Befestigung der Sensoreinrichtung an dem Gehäusekörper eingerichtet sein kann. Es ist jedoch prinzipiell auch denkbar, dass die Befestigungsschnittstelle zur (beschädigungs- bzw. zerstörungsfrei) unlösbaren Befestigung der Sensoreinrichtung an dem Gehäusekörper eingerichtet ist. Wie erwähnt, kommen grundsätzlich form- und/oder kraft- und/oder stoffschlüssige Befestigungsarten zur Befestigung der Sensoreinrichtung an dem Gehäusekörper in Betracht.

Die Befestigungsschnittstelle kann an oder im Bereich eines freien Endes des Gehäusekörpers angeordnet oder ausgebildet sein. Das freie Ende kann z. B. ein erstes freies Ende des Gehäusekörpers sein, welches einem zweiten freien Ende des Gehäusekörpers gegenüber liegend angeordnet ist. An oder im Bereich des zweiten freien Endes des Gehäusekörpers kann z. B. eine weiter oben erwähnte Auswerteeinrichtung angeordnet oder ausgebildet sein.

Wesentlich ist die - bezüglich der Symmetrie- bzw. Zentralachse des Gehäusekörpers - drehbare Anordnung bzw. Lagerung des Befestigungselements an dem Gehäusekörper. Das Befestigungselement ist sonach um eine, typischerweise durch die Symmetrie- bzw. Zentralachse des Gehäusekörpers definierte, Drehachse drehbar relativ zu dem Gehäusekörper an dem Gehäusekörper angeordnet bzw. gelagert. Die drehbare Anordnung bzw. Lagerung des Befestigungselements ermöglicht es sonach, das Befestigungselement unabhängig von dem Gehäusekörper relativ zu diesem zu verdrehen. Die drehbare Anordnung bzw. Lagerung des Befestigungselements ermöglicht es sonach insbesondere, das Befestigungselement im Rahmen einer Befestigung der Vorrichtung an bzw. in einem Behälter ohne eine Änderung der Ausrichtung bzw. Orientierung des Gehäusekörpers nebst daran befestigter Sensoreinrichtung zu bewegen. Das Befestigungselement ist, wie erwähnt, unabhängig von dem Gehäusekörper drehbar, was es z. B. ermöglicht, das Befestigungselement in eine Schraubaufnahme an bzw. in einem Behälter einzuschrauben, ohne den Gehäusekörper nebst daran befestigter Sensoreinrichtung zu verdrehen und somit in der Ausrichtung bzw. Orientierung zu verändern.

Derart ist mit vergleichsweise einfachem Montageaufwand eine stabile Befestigung der Sensoreinrichtung an bzw. in einem Behälter möglich, welche eine gewünschte Ausrichtung bzw. Orientierung der Sensoreinrichtung innerhalb des Behälters auch während der Montage gewährleistet. Insgesamt liegt damit eine verbesserte Vorrichtung zur Ermittlung des Füllstands eines Mediums in einem Behälter vor.

Der Gehäusekörper kann wenigstens einen sich bezüglich der bzw. einer Symmetrie- bzw. Zentralachse des Gehäusekörpers radial ausgerichteten bzw. verlaufenden Stufenabschnitt aufweisen; der Gehäusekörper kann sonach unterschiedliche Querschnittsgeometrien aufweisen. Das Befestigungselement kann wenigstens einen hierzu korrespondierenden radial ausgerichteten bzw. verlaufenden Gegenstufenabschnitt aufweisen; das Befestigungselement kann sonach unterschiedliche Querschnittsgeometrien aufweisen. Der wenigstens eine gehäusekörperseitige Stufenabschnitt und der wenigstens eine befestigungselementseitige Gegenstufenabschnitt können eingerichtet sein, unter Ausbildung einer axialen Anschlageinrichtung zusammenzuwirken. Die axiale Anschlageinrichtung ist wiederum eingerichtet, ein axiales Bewegen des Befestigungselements in Richtung eines der wenigstens einen Befestigungsschnittstelle abgewandten freien Endes des Gehäusekörpers zu verhindern. Die Anschlageinrichtung kann insoweit auch als Sicherungseinrichtung bezeichnet bzw. erachtet werden, welche - dies gilt insbesondere für den Montagezustand der Vorrichtung - eine unverlierbare Anordnung des Befestigungselements an dem Gehäusekörper sicherstellt. Der wenigstens eine gehäusekörperseitige Stufenabschnitt kann sonach auch als Anschlagelement, der wenigstens eine befestigungselementseitige Gegenstufenabschnitt auch als Gegenanschlagelement bezeichnet bzw. erachtet werden.

Die durch die Stufen- bzw. Gegenstufenabschnitte bedingten gestuften Geometrien des Gehäusekörpers und des Befestigungselements, d. h. insbesondere die gestufte Außengeometrie des Gehäusekörpers und die gestufte Innengeometrie des Befestigungselements, können sonach derart aufeinander angepasst sein, dass sich das Befestigungselement axial auf den Gehäusekörper aufschieben bzw. relativ zu diesem bewegen bzw. verschieben lässt (dies erfolgt typischerweise vor der Befestigung der Sensoreinrichtung an dem Gehäusekörper). Allerdings können axiale Bewegungen des Befestigungselements relativ zu dem Gehäusekörper durch ein entsprechendes Zusammenwirken jeweiliger Stufen- und Gegenstufenabschnitte respektive jeweiliger Anschlag- und Gegenanschlagelemente und die dadurch gebildete Anschlageinrichtung begrenzt sein.

Das Zusammenwirken des wenigstens einen gehäusekörperseitigen Stufenabschnitts und des wenigstens einen befestigungselementseitigen Gegenstufenabschnitts ermöglicht es ferner, axial auf die Vorrichtung, d. h. insbesondere die Befestigungseinrichtung, wirkende Kräfte zumindest teilweise in radiale Kräfte umzusetzen. Derart kann das Befestigungselement auf den Gehäusekörper geklemmt werden.

Das wie sich im Weiteren ergibt, gegebenenfalls auch als Klemm- bzw. Spannschraube, insbesondere als Innenklemm- bzw. Innenspannschraube, zu bezeichnende bzw. erachtende Befestigungselement kann analog dem Gehäusekörper eine hohlzylinderartige bzw. -förmige Grundform und somit eine symmetrische, d. h. insbesondere eine rotationssymmetrische, Grundform aufweisen und sonach eine Symmetrie- bzw. Zentralachse definieren. Die Symmetrie- bzw. Zentralachse des Befestigungselements kann mit einer Längsachse des Befestigungselements zusammenfallen.

Das Befestigungselement weist einen hohlzylinderartigen bzw. -förmigen ersten Befestigungselementabschnitt und wenigstens einen hohlzylinderartigen bzw. -förmigen weiteren bzw. zweiten Befestigungselementabschnitt auf. Der erste Befestigungselementabschnitt ist mit einer Angriffsstruktur für ein Werkzeug versehen. Der weitere bzw. zweite Befestigungselementabschnitt ist mit einer Außengewindestruktur versehen. Eine entsprechende Angriffsstruktur kann durch winklig zueinander ausgerichtete Flächen gebildet sein bzw. eine solche umfassen, an welchen ein Werkzeug, wie z. B. ein Schraubenschlüssel, eine Zange, etc., angreifen kann. Eine entsprechende Gewindestruktur kann durch eine Gewindeeinrichtung, insbesondere eine Außengewindeeinrichtung, gebildet sein bzw. eine solche umfassen.

Der weitere bzw. zweite Befestigungselementabschnitt weist wenigstens eine sich zumindest abschnittsweise axial in Richtung des freien Endes des weiteren bzw. zweiten Befestigungselements erstreckende, insbesondere schlitzartige bzw. -förmige, Ausnehmung auf. Der zweite Befestigungselementabschnitt weist sonach aufgrund einer durch eine entsprechende Ausnehmung gezielt herbeigeführten Schwächung eine gewisse Deformierbarkeit bzw. Verformbarkeit aus, welche es ermöglicht, diesen bedingt durch ein Zusammenwirken mit einem Gegenbefestigungselement eines Behälters im Rahmen einer Befestigung der Vorrichtung an bzw. in einem Behälter zu deformieren bzw. komprimieren, was im Montagezustand der Vorrichtung, in welchem diese an bzw. einem Behälter befestigt ist, zu einem klemmenden bzw. spannenden Umgreifen des Außenumfangs des Gehäusekörpers durch den weiteren bzw. zweiten Befestigungselementabschnitt führt.

Eine entsprechende Ausnehmung kann sich beispielsweise zumindest über 50% der Länge der axialen Länge des zweiten Befestigungselementabschnitts entlang dieses erstrecken. Insbesondere erstreckt sich eine entsprechende Ausnehmung vollständig im Bereich einer entsprechenden Gewindestruktur.

Der zweite Befestigungselementabschnitt kann mehrere, insbesondere gleichmäßig, außenumfangsmäßig verteilt angeordnete oder ausgebildete, sich jeweils zumindest abschnittsweise axial in Richtung des freien Endes des zweiten Befestigungselements erstreckende, insbesondere schlitzartige bzw. -förmige, Ausnehmungen aufweisen. Die vorstehend beschriebene Deformierbarkeit bzw. Verformbarkeit des zweiten Befestigungselementabschnitts wird durch mehrere entsprechende Ausnehmungen weiter begünstigt. Jeweilige Ausnehmungen können parallel oder nicht-parallel zueinander ausgerichtet sein.

Der wie das gesamte Befestigungselement typischerweise hohlzylinderartige bzw. -förmige weitere bzw. zweite Befestigungselementabschnitt weist typischerweise einen konstanten Innendurchmesser auf. Dies begünstigt die Herstellung des Befestigungselements, welches im Bereich des weiteren bzw. zweiten Befestigungselementabschnitts nicht mit einer Aufweitung zu versehen ist. Analoges kann für den ersten Befestigungselementabschnitt gelten.

Zurückkommend auf die Befestigungsschnittstelle zur Befestigung der Sensoreinrichtung an dem Gehäusekörper gilt, dass diese eingerichtet sein kann, die Sensoreinrichtung winklig relativ zu einer Symmetrie- bzw. Zentralachse des Gehäusekörpers an dem Gehäusekörper zu befestigen. Die Befestigungsschnittstelle, bei welches es sich, wie erwähnt, beispielsweise um eine Gewindeeinrichtung, wie z. B. ein Außen- oder Innengewinde, handeln kann, welche mit einer korrespondierenden Gewindeeinrichtung der Sensoreinrichtung, wie z. B. einem Innen- oder Außengewinde, zusammenwirkt, kann sonach selbst winklig relativ zu einer Symmetrie- bzw. Zentralachse des Gehäusekörpers ausgerichtet sein, woraus sich die winklige Befestigung der Sensoreinrichtung an dem Gehäusekörper ergibt. Die winklige Befestigung kann bedeuten, dass der Winkel zwischen der Symmetrie- bzw. Zentralachse des Gehäusekörpers und der Symmetrie- bzw. Zentralachse der Sensoreinrichtung in einem Bereich zwischen 0 und 180°, insbesondere einem Bereich zwischen 1 und 179°, weiter insbesondere in einem Bereich zwischen 1 und 90°, weiter insbesondere in einem Bereich zwischen 10 und 60°, weiter insbesondere in einem Bereich zwischen 15 und 50°, liegt. Die vorgenannten Bereiche beinhalten grundsätzlich alle Winkelwerte zwischen 0 und 180°, sodass der Winkel grundsätzlich jeden Wert zwischen 0 und 180° einnehmen kann. Konkret wird der Winkel zwischen der Symmetrie- bzw. Zentralachse des Gehäusekörpers und der Symmetrie- bzw. Zentralachse der Sensoreinrichtung typischerweise im Hinblick auf eine konkrete Montagesituation gewählt sein. Die winklige Anordnung bedingt typischerweise eine im Hinblick auf die Aussagekraft entsprechender Ermittlungs- bzw. Messergebnisse zweckmäßige Ausrichtung der Sensoreinrichtung in einen von einem Behälter umschlossenes mit einem Medium befüllbares bzw. befülltes Füllvolumen.

Für alle Ausführungsformen gilt, dass der Gehäusekörper und/oder das Befestigungselement aus einem metallischen Werkstoff, wie z. B. einem Aluminium- oder Eisen-basierten metallischen Werkstoff, gebildet sein kann. Denkbar sind jedoch auch Ausführungen des Gehäusekörpers und/oder des Befestigungselements aus anderen Materialien, wie z. B. aus Kunststoffen. Auch Kompositmaterialien, d. h. Materialien aus chemisch unterschiedlichen Werkstoffen bzw. Werkstoffgruppen, sind denkbar. Analoges gilt für die Sensoreinrichtung.

Ein zweiter Aspekt der Erfindung betrifft die Verwendung einer Vorrichtung gemäß dem ersten Aspekt der Erfindung zur Ermittlung des Füllstands eines Mediums in einem Behälter. Durch die Verwendung der Vorrichtung kann gleichermaßen ein Verfahren zur Ermittlung des Füllstands eines Mediums in einem Behälter implementiert sein bzw. werden. Die Verwendung bzw. das Verfahren kann ebenso einen eigenständigen Aspekt der Erfindung darstellen.

Sämtliche Ausführungen im Zusammenhang mit der Vorrichtung gemäß dem ersten Aspekt der Erfindung gelten analog für die Verwendung bzw. das Verfahren gemäß dem zweiten Aspekt der Erfindung.

Die Erfindung ist anhand von Ausführungsbeispielen in den Zeichnungen nochmals erläutert. Dabei zeigt:
Fig. 1 eine Prinzipdarstellung einer Vorrichtung gemäß einem Ausführungsbeispiel; und
Fig. 2, 3 eine Prinzipdarstellung eines Befestigungselements gemäß einem Ausführungsbeispiel.

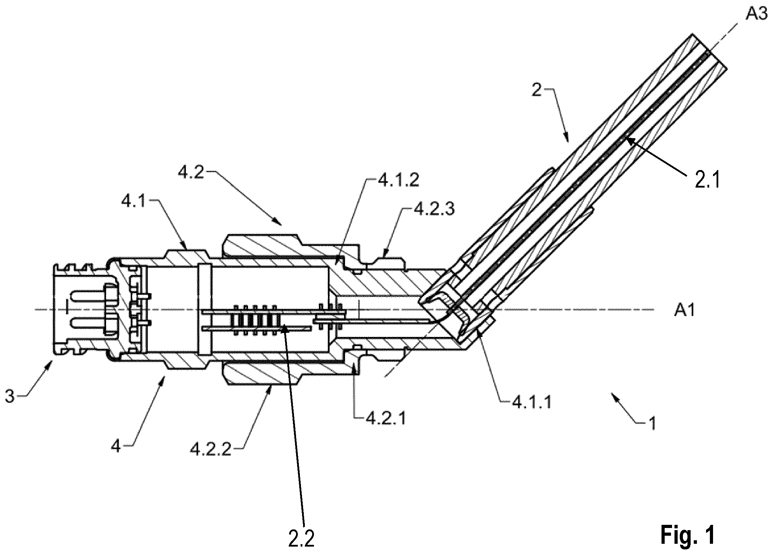

Fig. 1 zeigt eine Prinzipdarstellung einer Vorrichtung 1 gemäß einem Ausführungsbeispiel in einer längsgeschnittenen Ansicht.

Die Vorrichtung 1 ist zur Ermittlung des Füllstands eines fluiden Mediums, wie z. B. eines Gases und/oder einer Flüssigkeit, in einem Behälter (nicht gezeigt), wie z. B. einem Tank, eingerichtet. Die Vorrichtung 1 kann insbesondere eingerichtet sein, den Füllstand, z. B. öliger oder wässriger, Flüssigkeiten, wie z. B. Betriebsflüssigkeiten, eines Fahrzeugs, insbesondere eines Kraftfahrzeugs, oder einer Arbeitsmaschine, insbesondere einer Bau- oder Landmaschine, zu ermitteln.

Die Vorrichtung 1 umfasst eine Sensoreinrichtung 2 zur Erfassung von den Füllstand eines Mediums in einem Behälter beschreibenden Füllstandsinformationen. Die Sensoreinrichtung 2 ist sonach eingerichtet, den Füllstand eines Mediums in einem Behälter beschreibende Füllstandsinformationen zu erfassen. Die Sensoreinrichtung 2 umfasst typischerweise wenigstens ein aktives oder passives Sensorelement 2.1, welches eingerichtet ist, entsprechende Füllstandsinformationen zu erfassen. Entsprechende Füllstandsinformationen werden typischerweise über geeignete, an sich bekannte Verbindungselemente 2.2, wie z. B. Kontakte, Signalleitungen, etc., an eine hardware- und/oder softwaremäßig implementierte Auswerteeinrichtung 3 übertragen. Die Auswerteeinrichtung 3 ist typischerweise eingerichtet, entsprechende Füllstandsinformationen im Hinblick auf den bzw. einen zu ermittelnden Füllstand eines Mediums in einem Behälter auszuwerten. Ferner ist die Auswerteeinrichtung 3 typischerweise eingerichtet, eine ein Auswerteergebnis beschreibende Auswerteinformation zu erzeugen und über eine geeignete Ausgabeeinrichtung (nicht gezeigt), wie z. B. eine Anzeigeeinrichtung und/oder eine drahtgebundene oder drahtlose Kommunikationseinrichtung, an einen Nutzer und/oder an ein nutzerseitiges Endgerät auszugeben. Die Vorrichtung 1 umfasst sonach auch eine entsprechende Auswerteinrichtung 3 und/oder Ausgabeeinrichtung.

Die Vorrichtung 1 umfasst ferner eine Befestigungseinrichtung 4 zur Befestigung der Sensoreinrichtung 2 in einem mit einem Medium, dessen Füllstand zu ermitteln ist, befüllbaren bzw. befüllten Behälter. Die Befestigungseinrichtung 4 ist sonach zur Befestigung der Sensoreinrichtung 2 in einem entsprechenden Behälter eingerichtet. Die Befestigungseinrichtung 4 ist insbesondere eingerichtet, die Sensoreinrichtung 2 in einer definierten räumlichen Ausrichtung bzw. Orientierung in einem entsprechenden Behälter bzw. in einem entsprechenden Behälterinnenraum, insbesondere relativ zu einem in dem Behälter bzw. Behälterinnenraum befindlichen Medium, zu befestigen.

Die Befestigungseinrichtung 4 umfasst einen hohlzylinderartigen bzw. hülsenartigen Gehäusekörper 4.1. Der Gehäusekörper 4.1 weist aufgrund der hohlzylinderartigen bzw. hülsenartigen Grundform eine symmetrische, d. h. insbesondere eine rotationssymmetrische, Grundform auf und definiert sonach eine Symmetrie- bzw. Zentralachse A1. Die Symmetrie- bzw. Zentralachse A1 des Gehäusekörpers 4.1 fällt in dem Ausführungsbeispiel mit der Längsachse des Gehäusekörpers 4.1 zusammen.

Der Gehäusekörper 4.1 umfasst eine Befestigungsschnittstelle 4.1.1 zur Befestigung der Sensoreinrichtung 2 an dem Gehäusekörper 4.1 und ein drehbar an dem Gehäusekörper 4.1 gelagertes Befestigungselement 4.2 zur Befestigung des Gehäusekörpers 4.1 nebst daran befestigter Sensoreinrichtung 2 an bzw. in einem Behälter. Der Gehäusekörper 4.1 ist in funktioneller bzw. konstruktiver Hinsicht sonach einerseits über die Befestigungsschnittstelle 4.1.1 so konzipiert, dass sich die bzw. eine entsprechende Sensoreinrichtung 2 an dem Gehäusekörper 4.1 befestigen lässt, und andererseits über das Befestigungselement 4.2 so konzipiert, dass sich der Gehäusekörper 4.1 nebst daran befestigter Sensoreinrichtung 2 an bzw. in einem Behälter befestigen lässt.

Bei der Befestigungsschnittstelle 4.1.1 handelt es sich in dem Ausführungsbeispiel um eine Gewindeeinrichtung beispielhaft in Form eines Innengewindes. Die Gewindeeinrichtung ist eingerichtet, mit einer korrespondierenden Gegengewindeeinrichtung, beispielhaft in Form eines Außengewindes der Sensoreinrichtung 2 unter Ausbildung einer stabilen Befestigung der Sensoreinrichtung 2 an dem Gehäusekörper 4.1 zusammenzuwirken. Grundsätzlich kommt jedwede Befestigungsschnittstelle 4.1.1 in Betracht, die eine form- und/oder kraft- und/oder stoffschlüssige Befestigung der Sensoreinrichtung 2 an dem Gehäusekörper 4.1 ermöglicht.

Die Befestigungsschnittstelle 4.1.1 ist in dem Ausführungsbeispiel zur (beschädigungs- bzw. zerstörungsfrei) lösbaren Befestigung der Sensoreinrichtung 2 an dem Gehäusekörper 4.1 eingerichtet. Es ist jedoch prinzipiell auch denkbar, dass die Befestigungsschnittstelle 4.1.1 zur (beschädigungs- bzw. zerstörungsfrei) unlösbaren Befestigung der Sensoreinrichtung 2 an dem Gehäusekörper 4.1 eingerichtet ist. Wie erwähnt, kommen grundsätzlich form- und/oder kraft- und/oder stoffschlüssige Befestigungsarten zur Befestigung der Sensoreinrichtung 2 an dem Gehäusekörper 4.1 in Betracht.

Ersichtlich ist die Befestigungsschnittstelle 4.1.1 in dem Ausführungsbeispiel an bzw. im Bereich eines ersten freien Endes des Gehäusekörpers 4.1 angeordnet oder ausgebildet. Das erste freie Ende liegt in dem Ausführungsbeispiel einem zweiten freien Ende des Gehäusekörpers 4.1 gegenüber, an oder im Bereich dessen die erwähnte Auswerteeinrichtung 3 angeordnet oder ausgebildet ist.

Wesentlich ist die - bezüglich der Symmetrie- bzw. Zentralachse A1 des Gehäusekörpers 4.1 - drehbare Anordnung bzw. Lagerung des Befestigungselements 4.2 an dem Gehäusekörper 4.1.

Das Befestigungselement 4.2 ist sonach um eine, typischerweise durch die Symmetrie- bzw. Zentralachse A1 des Gehäusekörpers 4.1 definierte, Drehachse drehbar relativ zu dem Gehäusekörper 4.1 an dem Gehäusekörper 4.1 angeordnet bzw. gelagert. Die drehbare Anordnung bzw. Lagerung des Befestigungselements 4.2 ermöglicht es sonach, das Befestigungselement 4.2 unabhängig von dem Gehäusekörper 4.1 relativ zu diesem zu verdrehen. Die drehbare Anordnung bzw. Lagerung des Befestigungselements 4.2 ermöglicht es sonach insbesondere, das Befestigungselement 4.2 im Rahmen einer Befestigung der Vorrichtung 1 an bzw. in einem Behälter ohne eine Änderung der Ausrichtung bzw. Orientierung des Gehäusekörpers 4.1 nebst daran befestigter Sensoreinrichtung 2 zu bewegen. Das Befestigungselement 4.2 ist, wie erwähnt, unabhängig von dem Gehäusekörper 4.1 drehbar, was es z. B. ermöglicht, das Befestigungselement 4.2 in eine Schraubaufnahme an bzw. in einem Behälter einzuschrauben, ohne den Gehäusekörper 4.1 nebst daran befestigter Sensoreinrichtung 2 zu verdrehen und somit in der Ausrichtung bzw. Orientierung zu verändern.

Derart ist mit vergleichsweise einfachem Montageaufwand eine stabile Befestigung der Sensoreinrichtung 2 an bzw. in einem Behälter möglich, welche eine gewünschte Ausrichtung bzw. Orientierung der Sensoreinrichtung 2 innerhalb des Behälters auch während der Montage gewährleistet.

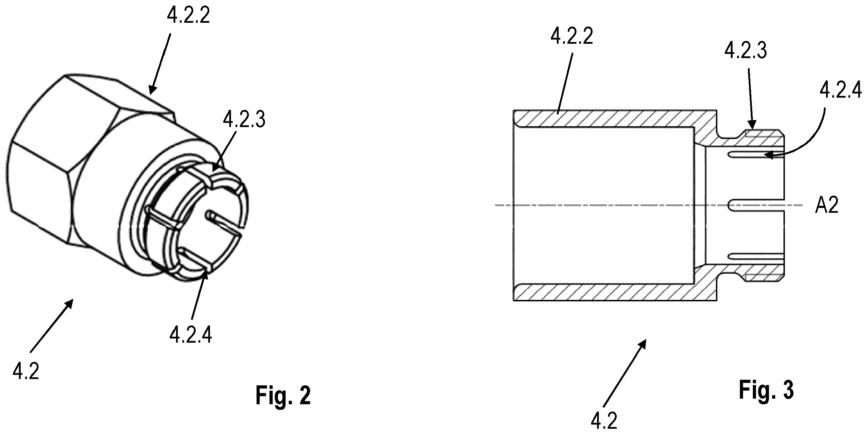

Anhand von Fig. 1 ist ersichtlich, dass der Gehäusekörper 4.1 einen sich bezüglich der bzw. einer Symmetrie- bzw. Zentralachse A1 des Gehäusekörpers 4.1 radial ausgerichteten bzw. verlaufenden Stufenabschnitt 4.1.2 aufweisen kann; der Gehäusekörper 4.1 kann sonach unterschiedliche Querschnittsgeometrien aufweisen. Das Befestigungselement 4.2 kann einen hierzu korrespondierenden radial ausgerichteten bzw. verlaufenden Gegenstufenabschnitt 4.2.1 aufweisen; das Befestigungselement 4.2 kann sonach unterschiedliche Querschnittsgeometrien aufweisen (vgl. Fig. 3, welche das Befestigungselement 4.2 in einer längsgeschnittenen Ansicht zeigt). Der gehäusekörperseitige Stufenabschnitt 4.1.2 und der befestigungselementseitige Gegenstufenabschnitt 4.2.1 sind eingerichtet, unter Ausbildung einer axialen Anschlageinrichtung zusammenzuwirken. Die in Fig. 1 ersichtliche axiale Anschlageinrichtung ist wiederum eingerichtet, ein axiales Bewegen des Befestigungselements 4.2 in Richtung des zweiten freien Endes und somit in Richtung des der Befestigungsschnittstelle 4.1.1 abgewandten freien Endes des Gehäusekörpers 4.1 zu verhindern. Die Anschlageinrichtung kann insoweit auch als Sicherungseinrichtung bezeichnet bzw. erachtet werden, welche - dies gilt insbesondere für den Montagezustand der Vorrichtung 1 - eine unverlierbare Anordnung des Befestigungselements 4.2 an dem Gehäusekörper 4.1 sicherstellt. Der gehäusekörperseitige Stufenabschnitt 4.1.2 kann sonach auch als Anschlagelement, der befestigungselementseitige Gegenstufenabschnitt 4.2.1 auch als Gegenanschlagelement bezeichnet bzw. erachtet werden.

Die durch die Stufen- bzw. Gegenstufenabschnitte 4.1.2, 4.2.1 bedingten gestuften Geometrien des Gehäusekörpers 4.1 und des Befestigungselements 4.2, d. h. insbesondere die gestufte Außengeometrie des Gehäusekörpers 4.1 und die gestufte Innengeometrie des Befestigungselements 4.2, sind sonach derart aufeinander angepasst sein, dass sich das Befestigungselement 4.2 axial auf den Gehäusekörper 4.1 aufschieben bzw. relativ zu diesem bewegen bzw. verschieben lässt (dies erfolgt typischerweise vor der Befestigung der Sensoreinrichtung 2 an dem Gehäusekörper 4.1). Allerdings können axiale Bewegungen des Befestigungselements 4.2 relativ zu dem Gehäusekörper 4.1 durch ein entsprechendes Zusammenwirken jeweiliger Stufen- und Gegenstufenabschnitte 4.1.2, 4.2.1 respektive jeweiliger Anschlag- und Gegenanschlagelemente und die dadurch gebildete Anschlageinrichtung begrenzt sein.

Das Zusammenwirken des wenigstens einen gehäusekörperseitigen Stufenabschnitts 4.1.2 und des wenigstens einen befestigungselementseitigen Gegenstufenabschnitts 4.2.1 ermöglicht es ferner, axial auf die Vorrichtung 1, d. h. insbesondere die Befestigungseinrichtung 4, wirkende Kräfte zumindest teilweise in radiale Kräfte umzusetzen. Derart kann das Befestigungselement 4.2 auf den Gehäusekörper 4.1 geklemmt werden.

Das wie sich im Weiteren ergibt, gegebenenfalls auch als Klemm- bzw. Spannschraube, insbesondere als Innenklemm- bzw. Innenspannschraube, zu bezeichnende bzw. erachtende Befestigungselement 4.2 weist analog dem Gehäusekörper 4.1 eine hohlzylinderartige bzw. hülsenartige Grundform und somit eine symmetrische, d. h. insbesondere eine rotationssymmetrische, Grundform auf und definiert sonach eine Symmetrie- bzw. Zentralachse A2, welche mit der Längsachse des Befestigungselements 4.2 zusammenfällt (vgl. Fig. 3).

Anhand der Fig. 1, 2, welche das Befestigungselement 4.2 in einer perspektivischen Ansicht (vgl. Fig. 2) und einer längsgeschnittenen Ansicht (vgl. Fig. 3) zeigen, kann das Befestigungselement 4.2 einen, insbesondere hohlzylinderartigen ersten Befestigungselementabschnitt 4.2.2 und einen, insbesondere hohlzylinderartigen, weiteren Befestigungselementabschnitt 4.2.3 aufweisen. Der erste Befestigungselementabschnitt 4.2.2 ist in dem Ausführungsbeispiel mit einer Angriffsstruktur (nicht bezeichnet) für ein Werkzeug versehen. Der weitere Befestigungselementabschnitt 4.2.3 ist in dem Ausführungsbeispiel mit einer Außengewindestruktur versehen. Eine entsprechende Angriffsstruktur kann, wie Fig. 2 zeigt, durch winklig zueinander ausgerichtete Flächen gebildet sein bzw. eine solche umfassen, an welchen ein Werkzeug, wie z. B. ein Schraubenschlüssel, eine Zange, etc., angreifen kann. Eine entsprechende Gewindestruktur kann durch eine Gewindeeinrichtung, insbesondere eine Außengewindeeinrichtung, gebildet sein bzw. eine solche umfassen.

Der weitere Befestigungselementabschnitt 4.2.3 weist in dem Ausführungsbeispiel mehrere, sich jeweils zumindest abschnittsweise axial in Richtung eines ersten freien Endes des zweiten Befestigungselements 4.2 erstreckende, insbesondere schlitzartige bzw. -förmige, Ausnehmung 4.2.4 auf. Der weitere Befestigungselementabschnitt 4.2.3 weist sonach aufgrund einer durch entsprechende Ausnehmungen 4.2.4 gezielt herbeigeführte Schwächungen eine gewisse Deformierbarkeit bzw. Verformbarkeit aus, welche es ermöglicht, diesen bedingt durch ein Zusammenwirken mit einem Gegenbefestigungselement eines Behälters im Rahmen einer Befestigung der Vorrichtung 1 an bzw. in einem Behälter zu deformieren bzw. komprimieren, was im Montagezustand der Vorrichtung 1, in welchem diese an bzw. einem Behälter befestigt ist, zu einem klemmenden bzw. spannenden Umgreifen des Außenumfangs des Gehäusekörpers 4.1 durch den weiteren Befestigungselementabschnitt 4.2.3 führt.

Anhand von Fig. 2 ist ersichtlich, dass sich entsprechende Ausnehmung 4.2.4 beispielsweise zumindest über 50% der Länge der axialen Länge des weiteren Befestigungselementabschnitts 4.2.3 erstrecken können. Insbesondere erstrecken sich die Ausnehmungen 4.2.4 vollständig im Bereich der entsprechenden Gewindestruktur.

Der wie das gesamte Befestigungselement 4.2 typischerweise hohlzylinderartige bzw. -förmige weitere Befestigungselementabschnitt 4.2.3 weist in dem Ausführungsbeispiel einen konstanten Innendurchmesser auf. Dies begünstigt die Herstellung des Befestigungselements 4.2, welches im Bereich des weiteren Befestigungselementabschnitts 4.2.3 nicht mit einer Aufweitung zu versehen ist. Analoges kann für den ersten Befestigungselementabschnitt 4.2.2 gelten.

Im Zusammenhang mit der geometrisch-konstruktiven Gestaltung des Befestigungselements 4.2 ist im Zusammenhang mit dem in den Fig. 2, 3 gezeigten Ausführungsbeispiel noch zu erwähnen, dass der erste Befestigungselementabschnitt 4.2.2 von dem weiteren Befestigungselementabschnitt 4.2.3 durch einen zwischenliegenden Befestigungselementabschnitt (nicht bezeichnet) getrennt sein kann. Das Befestigungselement 4.2 kann sonach - wie anhand der Fig. 2, 3 ersichtlich - mehrere geometrisch unterscheidbare Befestigungselementabschnitte aufweisen.

Im Zusammenhang mit der Befestigungsschnittstelle 4.1.1 zur Befestigung der Sensoreinrichtung 2 an dem Gehäusekörper 4.1 ist zu ergänzen, dass diese - wie anhand von Fig. 1 ersichtlich ist - eingerichtet sein kann, die Sensoreinrichtung 2 winklig relativ zu der Symmetrie- bzw. Zentralachse A1 des Gehäusekörpers 4.1 an dem Gehäusekörper 4 zu befestigen. Die Befestigungsschnittstelle 4.1.1 ist in dem Ausführungsbeispiel selbst winklig relativ zu der Symmetrie- bzw. Zentralachse A1 des Gehäusekörpers 4.1 ausgerichtet, woraus sich die winklige Befestigung der Sensoreinrichtung 2 an dem Gehäusekörper 4.1 ergibt. Die winklige Befestigung kann z. B. bedeuten, dass der Winkel zwischen der Symmetrie- bzw. Zentralachse A1 des Gehäusekörpers 4.1 und der Symmetrie- bzw. Zentralachse A3 der Sensoreinrichtung 2 in einem Bereich zwischen 1 und 179°, insbesondere in einem Bereich zwischen 10 und 90°, weiter insbesondere in einem Bereich zwischen 10 und 60°, weiter insbesondere in einem Bereich zwischen 15 und 50°, liegt. Die winklige Anordnung bedingt typischerweise eine im Hinblick auf die Aussagekraft entsprechender Ermittlungs- bzw. Messergebnisse zweckmäßige Ausrichtung der Sensoreinrichtung 2 in einen von einem Behälter umschlossenes mit einem Medium befüllbares bzw. befülltes Füllvolumen.

Der Gehäusekörper 4.1 und/oder das Befestigungselement 4.1 kann bzw. können aus einem metallischen Werkstoff, wie z. B. einem Aluminium- oder Eisen-basierten metallischen Werkstoff, gebildet sein kann. Denkbar sind jedoch auch Ausführungen des Gehäusekörpers 4.1 und/oder des Befestigungselements 4.2 aus anderen Materialien, wie z. B. aus Kunststoffen. Auch Kompositmaterialien, d. h. Materialien aus chemisch unterschiedlichen Werkstoffen bzw. Werkstoffgruppen, sind denkbar. Analoges gilt für die Sensoreinrichtung 2.

Aus vorstehenden Erläuterungen im Zusammenhang mit den in den Fig. gezeigten Ausführungsbeispielen ergibt sich, dass sich die über die Befestigungseinrichtung 4 realisierbare bzw. realisierte zur Befestigung der Sensoreinrichtung 2 an oder in einem Behälter von bekannten flanschartigen Befestigungen dadurch unterscheidet, dass außer entsprechenden Gewinden keine weiteren Befestigungspunkte am Behälter nötig sind.

Durch die Verwendung der Vorrichtung 1 kann ein Verfahren zur Ermittlung des Füllstands eines Mediums in einem Behälter implementiert sein bzw. werden.

## Patentansprüche

1. Vorrichtung (1) zur Ermittlung des Füllstands eines Mediums in einem Behälter, umfassend:
- eine Sensoreinrichtung (2) zur Erfassung von den Füllstand eines Mediums in einem Behälter beschreibenden Füllstandsinformationen;
- eine Befestigungseinrichtung (4) zur Befestigung der Sensoreinrichtung (2) in einem Behälter,
die Befestigungseinrichtung (4) einen, insbesondere hohlzylinderartigen bzw. -förmigen, Gehäusekörper (4.1) mit einer Befestigungsschnittstelle (4.1.1) zur Befestigung der Sensoreinrichtung (2) an dem Gehäusekörper (4.1) und ein drehbar an dem Gehäusekörper (4.1) gelagertes Befestigungselement (4.2) zur Befestigung der Befestigungseinrichtung (4) an einem Behälter umfasst, wobei
das Befestigungselement (4.2) einen hohlzylinderartigen bzw. -förmigen ersten Befestigungselementabschnitt (4.2.2) und einen hohlzylinderartigen bzw. -förmigen weiteren bzw. zweiten Befestigungselementabschnitt (4.2.3) aufweist, wobei der erste Befestigungselementabschnitt (4.2.2) mit einer Angriffsstruktur für ein Werkzeug und der weitere bzw. zweite Befestigungselementabschnitt (4.2.3) mit einer Außengewindestruktur versehen ist, **dadurch gekennzeichnet, dass** der weitere bzw. zweite Befestigungselementabschnitt (4.2.3) wenigstens eine sich zumindest abschnittsweise axial in Richtung des freien Endes des weiteren bzw. zweiten Befestigungselementabschnitts (4.2.3) erstreckende schlitzartige bzw. -förmige Ausnehmung (4.2.4) aufweist.

2. Vorrichtung nach Anspruch 1, **dadurch gekennzeichnet, dass** der Gehäusekörper (4.1) eine Symmetrie- oder Zentralachse (A1) aufweist.

3. Vorrichtung nach einem der vorhergehenden Ansprüche, **dadurch gekennzeichnet, dass** der Gehäusekörper (4.1) eine wenigstens einen sich bezüglich der bzw. einer Symmetrie- bzw. Zentralachse (A1) des Gehäusekörpers (4.1) radial ausgerichteten bzw. verlaufenden Stufenabschnitt (4.1.2) aufweist und das Befestigungselement (4.2) wenigstens einen hierzu korrespondierenden radial ausgerichteten bzw. verlaufenden Gegenstufenabschnitt (4.2.1) aufweist, wobei der wenigstens eine Stufenabschnitt (4.1.2) und der wenigstens eine Gegenstufenabschnitt (4.2.1) eingerichtet sind, unter Ausbildung einer axialen Anschlageinrichtung zusammenzuwirken.

4. Vorrichtung nach einem der vorhergehenden Ansprüche, **dadurch gekennzeichnet, dass** der weitere bzw. zweite Befestigungselementabschnitt (4.2.3) mehrere, insbesondere gleichmäßig, außenumfangsmäßig verteilt angeordnete oder ausgebildete, sich jeweils zumindest abschnittsweise axial in Richtung des freien Endes des weiteren bzw. zweiten Befestigungselementabschnitts (4.2.3) erstreckende, insbesondere schlitzartige bzw. -förmige, Ausnehmungen (4.2.4) aufweist.

5. Vorrichtung nach einem der vorhergehenden Ansprüche, **dadurch gekennzeichnet, dass** der weitere bzw. zweite Befestigungselementabschnitt (4.2.3) einen konstanten Innendurchmesser aufweist.

6. Vorrichtung nach einem der vorhergehenden Ansprüche, **dadurch gekennzeichnet, dass** die Befestigungsschnittstelle (4.1.1) eingerichtet ist, die Sensoreinrichtung (2) winklig relativ zu der bzw. einer Symmetrie- bzw. Zentralachse (A1) des Gehäusekörpers (4.1) an dem Gehäusekörper (4.1) zu befestigen.

7. Verwendung einer Vorrichtung (1) nach einem der Ansprüche 1 bis 6 zur Ermittlung des Füllstands eines Mediums in einem Behälter.

## Claims

1. Apparatus (1) for determining the level of a medium in a container, comprising:
- a sensor device (2) for detecting the level of a medium in a container descriptive level information;
- a fastening device (4) for fastening the sensor device (2) in a container,
the fastening device (4) comprises a housing body (4.1), in particular hollow cylinder-like or -shaped, with a fastening interface (4.1.1) for fastening the sensor device (2) to the housing body (4.1) and a rotatably mounted on the housing body (4.1) fastening element (4.2) for fastening the fastening device (4) to a container, wherein
the fastening member (4.2) has a hollow cylindrical or -shaped first fastening member portion (4.2.2) and a hollow cylindrical or -shaped further or second fastening member portion (4.2.3), wherein the first fastening member portion (4.2.2) is provided with an attack structure for a tool and the further or second fastening member portion (4.2.3) with an external thread structure,
**characterized in that** the further or second fastening element portion (4.2.3) has at least a slot-like or -shaped recess (4.2.4) extending at least axially in the direction of the free end of the further or second fastening element portion (4.2.3).

2. Apparatus according to claim 1, **characterized in that** the housing body (4.1) has a symmetry or central axis (A1).

3. Apparatus according to any one of the preceding claims, **characterized in that** the housing body (4.1) has at least one with respect to the or a symmetry or central axis (A1) of the housing body (4.1) radially aligned or extending step portion (4.1.2) and the fastening element (4.2) has at least one corresponding radially aligned or extending counter step portion (4.2.1), wherein the at least one step portion (4.1.2) and the at least one counter step portion (4.2.1) are arranged to cooperate forming an axial stop device.

4. Apparatus according to one of the preceding claims, **characterized in that** the further or second fastening element portion (4.2.3) has several, in particular uniformly, externally distributed or formed, each at least axially in the direction of the free end of the further or second fastening element portion (4.2.3) extending, in particular slot-like or -shaped, recesses (4.2.4).

5. Apparatus according to one of the preceding claims, **characterized in that** the further or second fastening element portion (4.2.3) has a constant inner diameter.

6. Apparatus according to one of the preceding claims, **characterized in that** the mounting interface (4.1.1) is arranged to attach the sensor device (2) angularly relative to the or a symmetry or central axis (A1) of the housing body (4.1) to the housing body (4.1).

7. Use of an apparatus (1) according to any one of claims 1 to 6 for determining the level of a medium in a container.

## Revendications

1. Dispositif (1) pour la détermination du niveau d'un milieu dans un récipient comprenant:
- un dispositif de détection (2) pour la détection du niveau d'un milieu dans un récipient, des informations de niveau descriptives;
- un dispositif de fixation (4) pour fixer le dispositif de détection (2) dans un récipient,
le dispositif de fixation (4) comprend un corps de boîtier (4.1), en particulier cylindrique ou creux, avec une interface de fixation (4.1.1) pour fixer le dispositif de détection (2) au corps du boîtier (4.1) et un élément de fixation (4.2) monté de manière rotative sur le corps du boîtier (4.1) pour fixer le dispositif de fixation (4) à un réservoir, dans lequel:
l'élément de fixation (4.2) comporte une première section de fixation cylindrique ou en forme de creux (4.2.2) et une autre section de fixation creux ou en forme de creux (4.2.3), la première section de fixation (4.2.2) étant pourvue d'une structure d'attaque pour un outil et la deuxième section de fixation (4.2.3) étant pourvue d'une structure filetée extérieure;
**caractérisé en ce que** l'autre ou la deuxième section de fixation (4.2.3) présente au moins une évidement en forme de fente (4.2.4) s'étendant axialement au moins par section dans le sens de l'extrémité libre de l'autre ou de la deuxième section de fixation (4.2.3).

2. Dispositif selon la revendication 1, **caractérisé en ce que** le corps du boîtier (4.1) a un axe de symétrie ou un axe central (A1).

3. Dispositif selon l'une quelconque des revendications précédentes, **de ce fait: marqué que** le corps du boîtier (4.1) comporte au moins une section de marche (4.1.2) orientée radialement par rapport à l'axe de symétrie ou à l'axe central (A1) du corps du boîtier (4.1) et que l'élément de fixation (4.2) comporte au moins une section de marche opposée correspondante (4.2.1) orientée radialement ou passante, l'une au moins étant constituée d'une section de marche (4.1.2) et l'autre d'au moins une section de marche opposée (4.2.1), afin de travailler ensemble en formant un dispositif d'ancrage axial.

4. Dispositif selon l'une quelconque des revendications précédentes, **caractérisé en ce que** l'autre ou la deuxième partie de l'élément de fixation (4.2.3) comporte plusieurs orifices, notamment en forme de fente ou de fente (4.2.4), disposés ou formés de manière uniformément répartis sur toute la circonférence extérieure, s'étendant chacun au moins par segments axiaux dans le sens de l'extrémité libre de l'autre ou de la deuxième partie de l'élément de fixation (4.2.3).

5. Dispositif selon l'une quelconque des revendications précédentes, **caractérisé en ce que** l'élément de fixation supplémentaire ou secondaire (4.2.3) présente un diamètre intérieur constant.

6. Dispositif selon l'une quelconque des revendications précédentes, **caractérisé en ce que** l'interface de fixation (4.1.1) est mise en place pour fixer le dispositif de capteur (2) à angle par rapport à l'axe de symétrie ou à l'axe central (A1) du corps du boîtier (4.1) au corps du boîtier (4.1).

7. Utilisation d'un dispositif (1) selon l'une quelconque des revendications 1 à 6 pour déterminer le niveau d'un milieu dans un récipient.
